# EUROPEAN PATENT APPLICATION

(11) **EP 3 483 623 A1**
(43) Date of publication of application: **15.05.2019**
(21) Application number: 17201283.3
(22) Date of filing: 13.11.2017
(51) Int. Cl.: G01S 7/40, G01S 13/93

(54) **VEHICLE RADAR SETTING METHOD**

(71) Applicant: CUB Elecparts Inc., Changhua County (TW)
(72) Inventor: YU, San-Chuan, CHANGHUA COUNTY (TW); YU, Yu-Tao, CHANGHUA COUNTY (TW); HO, Meng-Yu, CHANGHUA COUNTY (TW); LIN, Jyong, CHANGHUA COUNTY (TW)
(74) Representative: Becker Kurig Straus

(57) **Abstract**

A vehicle radar setting method includes the step of providing a setting tool, the step pf using the setting tool to choose vehicle year, brand and model, the step of fetching the corresponding vehicle radar main program according to the chosen vehicle year brand and model, the step of transmitting the vehicle radar main program to the vehicle radar, and the step of enabling the vehicle radar to receive and install the vehicle radar main program.

## Description

### BACKGROUND OF THE INVENTION

### 1. Field of the Invention

The present invention relates to vehicle radar technology and more particularly, to a vehicle radar setting method.

### 2. Description of the Related Art

To improve traffic safety, a variety of vehicle radars have been widely used in different vehicles for a variety of purposes. However, due to different vehicle brands and models and different radars from different manufacturers use different control programs, the associating setting parameters will be different. Thus, a vehicle depot or repair shop needs to prepare different vehicle radars from different manufacturers or providers for installation and repair to meet the needs of different users. This problem will cause a vehicle depot or repair shop a great distress in preparation of spare parts. Therefore, there is a strong need for a more simplified setting method to improve this problem.

### SUMMARY OF THE INVENTION

The present invention has been accomplished under the circumstances in view. It is the main object of the present invention to provide a vehicle radar setting method, which enables a vehicle radar to be set in compliance with the communication format of a predetermined vehicle or radar brand through a simple setting procedure, achieving the purpose of simplifying installation and saving spare parts.

To achieve this and other objects of the present invention, a vehicle radar setting method comprises the step of providing a setting tool, the step of using the setting tool to choose vehicle year, brand and model, the step of fetching the corresponding vehicle radar main program according to the chosen vehicle year brand and model, the step of transmitting the vehicle radar main program to the vehicle radar, and the step of enabling the vehicle radar to receive and install the vehicle radar main program.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a flow chart of a vehicle radar setting method in accordance with a first embodiment of the present invention.
FIG. 2 is a functional block diagram of the setting tool in accordance with the first embodiment of the present invention.
FIG. 3 is a functional block diagram of the vehicle radar in accordance with the first embodiment of the present invention.
FIG. 4 is a flow chart of a vehicle radar setting method in accordance with a second embodiment of the present invention.
F1G. 5 is a functional block diagram of the setting tool in accordance with the second embodiment of the present invention.
FIG. 6 is a functional block diagram of the vehicle radar in accordance with the second embodiment of the present invention.

### DETAILED DESCRIPTION OF THE INVENTION

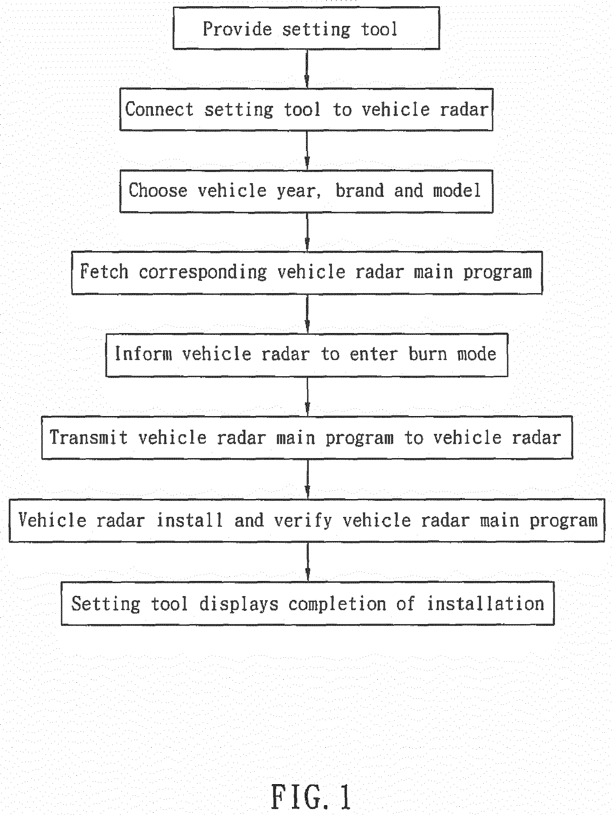

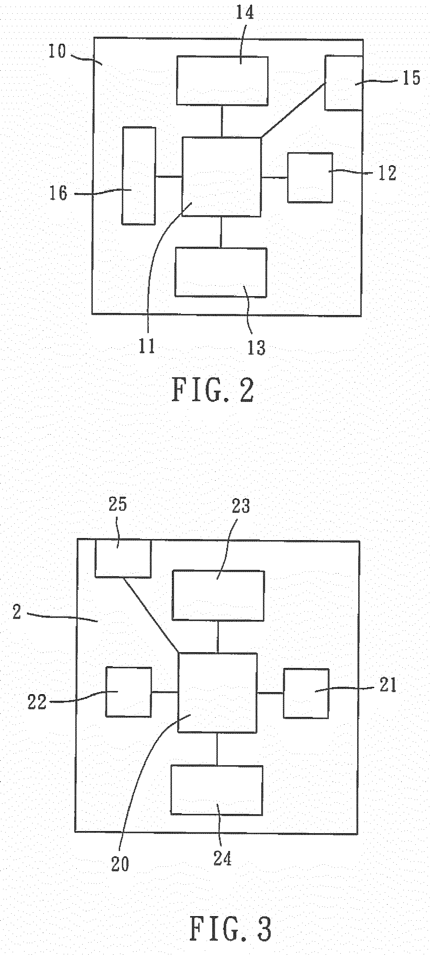

Referring to FIG. 1, a flow chart of a vehicle radar setting method in accordance with a first embodiment of the present invention is shown. The vehicle radar setting method in accordance with the first embodiment of the present invention comprises the steps of:
Step A: Provide a setting tool **10.** As shown in FIG. 2, the setting tool **10** comprises a processing unit **11** having electrically connected thereto a memory unit **12,** a display **13,** an input unit **14,** a power source **15** and a communication transmission interface **16.** The memory unit **12** has installed therein communication protocols and setting parameters provided by various vehicle or radar providers. The setting parameters include installation angle, installation height and other parameters. Further, the display **13** and the input unit **14** can be integrated into one unit, for example, a touch screen having display and input functions.
Step B: Connect the communication transmission interface **16** of the setting tool **10** to the vehicle radar to be set through a CAN (Controller Area Network). Alternatively, the communication transmission interface **16** of the setting tool **10** can be connected to the vehicle radar **2** to be set through a LIN (Local Interconnect Network) or MOST (Media Oriented System Transport). As illustrated in FIG. 3, the vehicle radar **2** comprises a computing unit **20** having electrically connected thereto a memory unit **21,** a communication interface **22,** an output unit **23,** a RF **24** and a power source **25.** The vehicle radar **2** is connected to the setting tool **10** through the communication interface **22.** The output unit **23** is adapted for outputting an alarm signal that can be an audio alarm signal or visual alarm signal. The output unit **23** can be omitted in some models.
Step C: Use the input unit **14** of the setting tool **10** to choose the year, brand and model of the vehicle that carries the vehicle radar **2.**
Step D: The processing unit **11** of the setting tool **10** fetches from the memory unit **12** the main program corresponding to the year, brand and model of the vehicle the user chosen. This main program contains the control program that controls the main function of the vehicle radar **2** and the related setting parameters.
Step E: The vehicle radar **2** enters burn mode. In this embodiment, the setting tool **10** sends a signal, causing the vehicle radar **2** to enter burn mode. The vehicle radar **2** can enter burn mode through any of other measures.
Step F: The setting tool **10** transmits the main program to the vehicle radar **2.**
Step G: The vehicle radar **2** receives and installs the main program and then verifies that the main program is installed correctly, and then replies a signal to the setting tool **10** after completion of the installation.

Further, Step E can be carried out before Step C or after Step D. Further, Step B is only required before Step E but not limited to before Step C.

By means of the setting method of the first embodiment of the present invention, a setting staff can set a vehicle radar to be in compliance with a predetermined vehicle or vehicle radar communication format by using a setting method of loading a main program in a vehicle or vehicle radar, achieving the purpose of simplifying installation and saving spare parts.

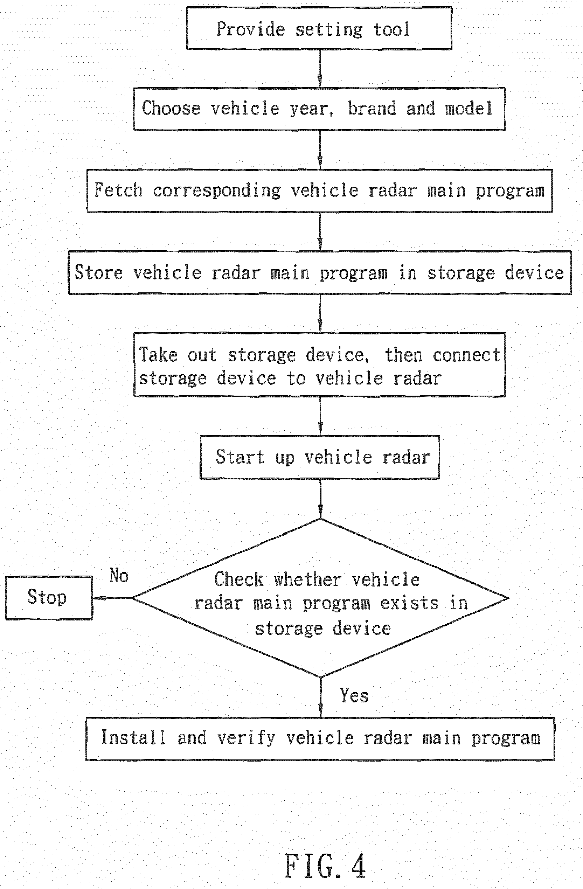

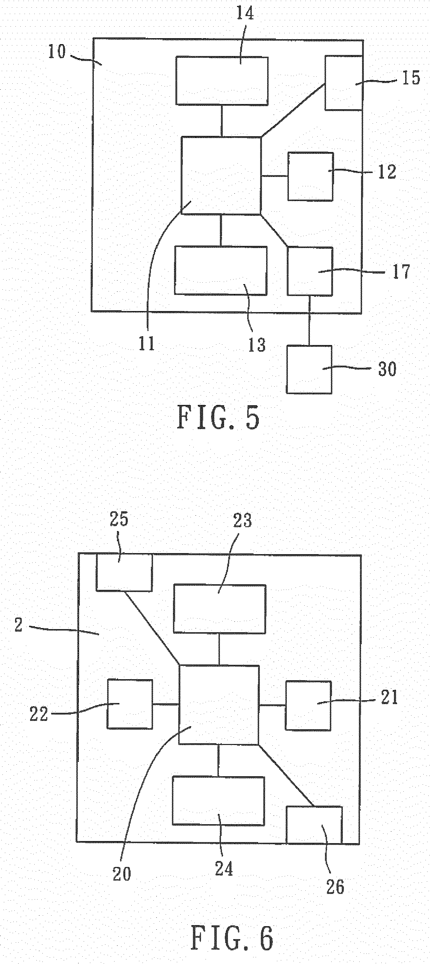

Referring to FIG. 4, a vehicle radar setting method in accordance with a second embodiment of the present invention is shown. This second embodiment is substantially similar to the aforesaid first embodiment with the exception the procedure of transmitting the main program to the vehicle radar. In accordance with this second embodiment, the vehicle radar setting method comprises the steps of:
Step A: Provide aa setting tool **10,** which, as illustrated in FIG. 5, comprises a processing unit **11** having electrically connected thereto a memory unit **12, a** display **13,** an input unit **14** and a power source **15.** In this second embodiment, the setting tool **10** further comprises a storage data connection port **17** for the connection of a storage device **30** that can be, for example, a flash drive or SD card. As illustrated in FIG. 4, the memory unit **12** has installed therein communication protocols and setting parameters provided by various vehicle or radar providers.
Step C: Use the input unit **14** of the setting tool **10** to choose the year, brand and model of the vehicle that carries the vehicle radar **2.**
Step D: The processing unit **11** of the setting tool **10** fetches from the memory unit **12** the main program corresponding to the year, brand and model of the vehicle the user chosen. This main program contains the control program that controls the main function of the vehicle radar **2** and the related setting parameters.
   Step I: Store the vehicle radar main program in a storage device **30 that** can be a SD card or flash drive.
   As illustrated in FIG. 6, the vehicle radar **2** comprises a computing unit **20** having electrically connected thereto a memory unit **21,** a communication interface **22,** an output unit **23,** a RF **24,** a power source **25** and a data connection interface **26.**
Step J: Take out the storage device 30, and then connect the storage device 30 to the vehicle radar **2.** As a general practice, an SD card or a flash drive can be directly inserted into the data connection interface **26** of the vehicle radar **2.**
Step K: Start up the vehicle radar.
Step L: The vehicle radar **2** checks whether there is a main program in the storage device. If yes, go to step G. If not, return to the original function and do not start up the setting action.
Step G: The vehicle radar **2** installs the main program.

Further, the aforesaid Step I can be carried out before Step C.

This second embodiment uses a storage device to transfer the main program so that the user can directly set the desired main program and setting parameters in the vehicle radar for application by means of plugging or replacing a card, achieving the purpose of simplifying installation and saving spare parts.

## Claims

1. A vehicle radar setting method, comprising the steps of:
A) providing a setting tool (10) comprising a processing unit (11) having connected thereto a memory unit (12), a display (13), an input unit (14), a power source (15) and a communication transmission interface (16);
B) connecting said setting tool (10) to a vehicle radar;
C) using said input unit (14) of said setting tool to choose vehicle year, brand and model;
D) fetching the corresponding vehicle radar main program according to the chosen vehicle year, brand and model;
E) said vehicle radar entering burn mode;
F) said setting tool (10) transmitting said vehicle radar main program to said vehicle radar; and
G) said vehicle radar receiving and installing said vehicle radar main program.

2. The vehicle radar setting method as claimed in claim 1, wherein Step G) further comprises the procedure that said vehicle radar replies a signal to said setting tool after completion of the installation of said vehicle radar main program.

3. The vehicle radar setting method as claimed in claim 1, further comprising Step H) of enabling said setting tool to display a message of completion of installation after Step G).

4. The vehicle radar setting method as claimed in claim 1, wherein said vehicle radar main program comprises setting parameters including radar installation angle and/or height.

5. The vehicle radar setting method as claimed in claim 1, wherein said setting tool and said vehicle radar are connected using a CAN (Controller Area Network), LIN (Local Interconnect Network) or MOST (Media Oriented System Transport).

6. The vehicle radar setting method as claimed in claim 1, wherein Step E) is selectively performable before Step C) or after Step D).

7. A vehicle radar setting method, comprising the step of:
A) providing a setting tool (10) comprising a processing unit (11) having connected thereto a memory unit (12), a display (13), an input unit(14), a power source (15) and a storage data connection port(17) for the connection of a storage device (30);
C) using said input unit (14) of said setting tool to choose vehicle year, brand and model;
D) fetching the corresponding vehicle radar main program according to the chosen vehicle year, brand and model;
I) storing the fetched vehicle radar main program in a storage device (30);
J) taking out said storage device (30) and then connecting said storage device (30) to said vehicle radar;
K) starting up said vehicle radar (2);
L) said vehicle radar (2) checking whether said vehicle radar main program exists in storage device, and then proceeding to Step G) if yes, or stopping the installation if not; and
G) said vehicle radar (2) installing said vehicle radar main program.

8. The vehicle radar setting method as claimed in claim 7, wherein said vehicle radar main program contains a control program that controls the main function of said vehicle radar and predetermined setting parameters.

9. The vehicle radar setting method as claimed in claim 8, wherein said predetermined setting parameters include radar installation angle and/or height.

10. The vehicle radar setting method as claimed in claim 7, wherein said storage device (30) is selectively a SD card or flash drive.

## Amended claims

### Amended claims in accordance with Rule 137(2) EPC.

1. A vehicle radar setting method, comprising the steps of:
A) providing a setting tool (10) comprising a processing unit (11) having connected thereto a memory unit (12), a display (13), an input unit (14), a power source (15) and a communication transmission interface (16);
B) connecting said setting tool (10) to a vehicle radar;
C) using said input unit (14) of said setting tool to choose vehicle year, brand and model;
D) fetching the corresponding vehicle radar main program according to the chosen vehicle year, brand and model from the memory unit (12);
E) said vehicle radar entering burn mode;
F) said setting tool (10) transmitting said vehicle radar main program to said vehicle radar; and
G) said vehicle radar receiving and installing said vehicle radar main program.

2. The vehicle radar setting method as claimed in claim 1, wherein Step G) further comprises the procedure that said vehicle radar replies a signal to said setting tool after completion of the installation of said vehicle radar main program.

3. The vehicle radar setting method as claimed in claim 1, further comprising Step H) of enabling said setting tool to display a message of completion of installation after Step G).

4. The vehicle radar setting method as claimed in claim 1, wherein said vehicle radar main program comprises setting parameters including radar installation angle and/or height.

5. The vehicle radar setting method as claimed in claim 1, wherein said setting tool and said vehicle radar are connected using a CAN (Controller Area Network), LIN (Local Interconnect Network) or MOST (Media Oriented System Transport).

6. The vehicle radar setting method as claimed in claim 1, wherein Step E) is selectively performable before Step C) or after Step D).

7. A vehicle radar setting method, comprising the step of:
A) providing a setting tool (10) comprising a processing unit (11) having connected thereto a memory unit (12), a display (13), an input unit (14), a power source (15) and a storage data connection port (17) for the connection of a storage device (30);
C) using said input unit (14) of said setting tool to choose vehicle year, brand and model;
D) fetching the corresponding vehicle radar main program according to the chosen vehicle year, brand and model from the memory unit (12);
I) storing the fetched vehicle radar main program in a storage device (30);
J) connecting said storage device (30) to said vehicle radar;
K) starting up said vehicle radar (2);
L) said vehicle radar (2) checking whether said vehicle radar main program exists in storage device, and then proceeding to Step G) if yes, or stopping the installation if not; and
G) said vehicle radar (2) installing said vehicle radar main program.

8. The vehicle radar setting method as claimed in claim 7, wherein said vehicle radar main program contains a control program that controls the main function of said vehicle radar and predetermined setting parameters.

9. The vehicle radar setting method as claimed in claim 8, wherein said predetermined setting parameters include radar installation angle and/or height.

10. The vehicle radar setting method as claimed in claim 7, wherein said storage device (30) is selectively a SD card or flash drive.
